(19) Europäisches Patentamt
European Patent Office
Office européen des brevets

(11) **EP 2 042 876 B1**

(12) **EUROPÄISCHE PATENTSCHRIFT**

(45) Veröffentlichungstag und Bekanntmachung des Hinweises auf die Patenterteilung:
**18.07.2012 Patentblatt 2012/29**

(51) Int Cl.:
*G01P 3/36* *(2006.01)*     *G01S 17/58* *(2006.01)*
*B65H 61/00* *(2006.01)*

(21) Anmeldenummer: **07019122.6**

(22) Anmeldetag: **28.09.2007**

(54) **Verfahren zum Messen eines geschwindigkeitsabhängingen Parameters eines Garns**

Method for measuring a velocity dependent parameter of a yarn

Procédé pour la mesure de paramètres dépendant de la vitesse d'un fil

(84) Benannte Vertragsstaaten:
**BE CH DE FR IT LI**

(43) Veröffentlichungstag der Anmeldung:
**01.04.2009 Patentblatt 2009/14**

(73) Patentinhaber: **Gebrüder Loepfe AG**
**CH-8623 Wetzikon (CH)**

(72) Erfinder:
• **Malacarne, Rico**
**CH-8630 Rüti (CH)**
• **Occhi, Lorenzo**
**CH-8330 Pfäffikon (CH)**
• **Rohr, Daniel**
**CH-8620 Wetzikon (CH)**
• **Schlatter, Adrian**
**CH-8046 Zürich (CH)**

(74) Vertreter: **Sutter, Kurt**
**E. Blum & Co**
**Patentanwälte VSP**
**Vorderberg 11**
**8044 Zürich (CH)**

(56) Entgegenhaltungen:
**EP-A- 1 521 085     US-A- 5 064 280**

• **DUBBELDAM G C: "THE CONTACTLESS DETERMINATION OF YARN SPEED WITH A LASER-DOPPLER VELOCITY METER" JOURNAL OF THE TEXTILE INSTITUTE, WOODHEAD PUBLISHING LIMITED, CAMBRIDGESHIRE, GB, Bd. 65, 1974, Seiten 483-487, XP001203869 ISSN: 0040-5000**

**Beschreibung**

Die Erfindung betrifft ein Verfahren zum Messen eines geschwindigkeitsabhängigen Parameters eines Garns sowie Verwendungen desselben gemäss Oberbegriff der unabhängigen Ansprüche.

Zur berührungslosen Messung von Garngeschwindigkeiten, oder eines von der Garngeschwindigkeit abhängigen Parameters, wie z.B. der gespulten Länge, wurden Korrelationsverfahren vorgeschlagen, welche darauf beruhen, dass der selbe Parameter an zwei voneinander beabstandeten Orten entlang des Garnpfades gemessen wird. Die zwei so erhaltenen Signale werden miteinander korreliert, um die Zeitverzögerung zwischen ihnen zu ermitteln, aus welcher sodann aufgrund des bekannten Abstands der beiden Orte auch die Geschwindigkeit des Garns bestimmt werden kann. Korrelationsmessungen sind jedoch aufwändig, insbesondere wenn auch hohe Garngeschwindigkeiten gemessen werden sollen.

US 5 064 280 beschreibt ein Verfahren, um die Geschwindigkeit eines Textilbandes mittels der Dopplerverschiebung einer am Textilband gestreuten Lichtwelle zu messen.

G. C. Dubbeldam, "The contactless determination of yarn speed with a laser-Doppler velocity meter", Journal of the Textile Institute, Woodhead Publ. Ltd., Bd. 65, 1974, Seiten 483 -487, beschreibt ebenfalls ein solches Verfahren, jedoch angewandt auf die Geschwindigkeitsmessung an einem Garn.

In beiden diesen Verfahren wird das Band bzw. das Garn an einer Linse vorbegeführt, aus welcher Licht austritt, das am Band bzw. Garn gestreut wird. Die gestreuten Lichtstrahlen laufen durch die Linse zurück zu einem Detektor, wo die Dopplerinterferenz gemessen wird.

Es stellt sich die Aufgabe, ein alternatives Messverfahren bereitzustellen.

Diese Aufgabe wird vom Verfahren gemäss Anspruch 1 gelöst. Anspruchsgemäss wird also ein erster Lichtstrahl auf das Garn geworfen und durch Streuung in mindestens eine erste Lichtwelle gestreut. Die Frequenz bzw. Wellenlänge der ersten Lichtwelle ist aufgrund der Garnbewegung einer Dopplerverschiebung unterworfen. Wird die erste Lichtwelle sodann mit einer zweiten Lichtwelle zur Überlagerung gebracht, wobei die Frequenz der zweiten Lichtwelle nicht oder in anderer Weise einer Dopplerverschiebung unterlag, so kommt es zu einer Schwebung bzw. einer periodisch sich ändernden Interferenz, deren Frequenz direkt von der Geschwindigkeit des Garns abhängig ist und gemessen werden kann.

Dieses Messverfahren ist aus anderen Gebieten unter dem Namen Laser-Doppler-Anemometrie (LDA) oder Laser-Doppler-Velocimetrie (LDV) bekannt.

Anspruchsgemäss wird das Garn an einem transparenten Körper vorbei geführt, wobei die erste Lichtwelle erzeugt wird, indem Licht vom Lichtstrahl aus dem Körper austritt und vom Garn gestreut wird. Die zweite Lichtwelle wird durch Streuung, insbesondere Reflektion, eines Teils des Lichtstrahls an einer Oberfläche des transparenten Körpers erzeugt.

Weiter ist von Vorteil, wenn der Lichtstrahl beim Auftreffen auf das Garn einen länglichen Querschnitt aufweist, wobei die lange Querschnittsachse im Wesentlichen senkrecht zum Garn steht. Damit wird die Gefahr reduziert, dass das Garn aufgrund seitlicher Auslenkungen aus dem Messfeld austritt, während durch die kleinere Ausdehnung des Lichtfelds entlang der Garnlängsrichtung vermieden wird, dass erste Lichtwellen aus stark unterschiedlichen Richtungen beim Detektor eintreffen. Dies erhöht die Frequenzschärfe des Messsignals.

Das Verfahren kann für eine Vielzahl von Anwendungen eingesetzt werden. Beispielsweise kann es zum Messen einer gespulten Garnlänge und/oder der Länge oder Position von Garnfehlern verwendet werden.

Zu beachten ist, dass die Geschwindigkeit im vorliegenden Verfahren nicht explizit berechnet und ausgegeben werden muss. Das vom Detektor ermittelte Signal kann auch ohne explizite Berechnung der Geschwindigkeit direkt weiterverarbeitet werden, z.B. indem die vom Detektor aufgenommenen Signalperioden gezählt werden und somit die Geschwindigkeit zu einer Weglänge aufintegriert wird. Auch in einem solchen Fall wird jedoch ein "geschwindigkeitsabhängiger Parameter" im Sinne der Ansprüche gemessen.

Der Begriff "streuen" oder "Streuung" bezeichnet im vorliegenden Rahmen jegliche Arten von Lichtablenkung, sei es durch diffuse oder nicht diffuse Brechung oder durch diffuse oder nicht diffuse Reflektion

Weitere bevorzugte Ausführungen des Verfahrens ergeben sich aus den abhängigen Ansprüchen sowie aus der nun folgenden Beschreibung anhand der Figuren. Dabei zeigen:

Fig. 1 eine erste Ausführung einer Messanordnung,
Fig. 2 eine zweite Ausführung einer Messanordnung,
Fig. 3 eine dritte Ausführung einer Messanordnung,
Fig. 4 eine vierte Ausführung einer Messanordnung,
Fig. 5 eine fünfte Ausführung einer Messanordnung,
Fig. 6 eine perspektivische Ansicht einer sechsten Ausführung einer Messanordnung,
Fig. 7 die Ausführung nach Fig. 6 von der Seite her gesehen,
Fig. 8 einen Schnitt durch eine siebte Ausführung einer Messanordnung,

Fig. 9 eine perspektivische Illustration der Wirkung eines Messstrahls mit elliptischem Querschnitt und
Fig. 10 die Situation nach Fig. 9 von der Seite her gesehen.

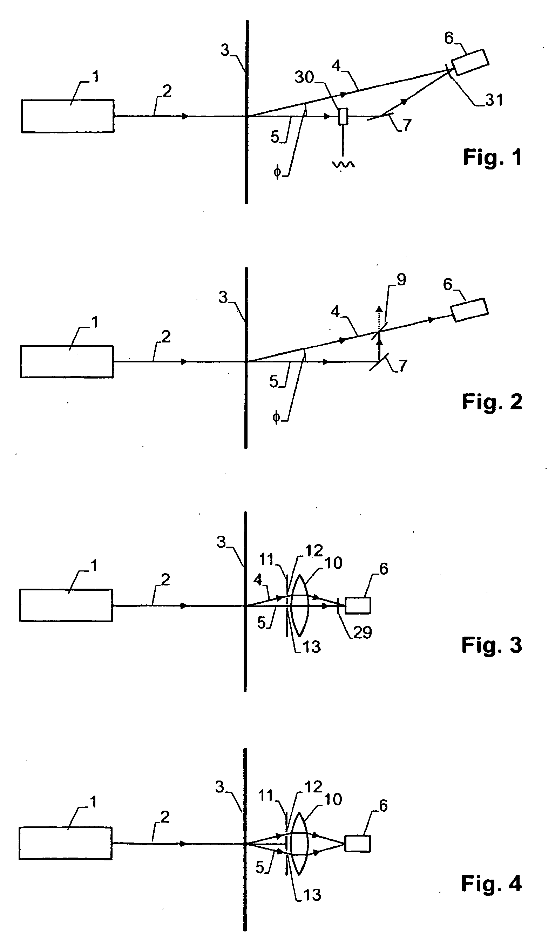

Die in Fig. 1 dargestellte Ausführung (nicht beansprucht) eines LDA-Sensors besitzt eine kohärente Lichtquelle 1, vorzugsweise einen Halbleiter-Laser, welcher einen Lichtstrahl 2 erzeugt. Der Lichtstrahl 2 trifft auf ein mit einer Geschwindigkeit v laufendes Garen 3, wo er teilweise gestreut wird. Ein als "erste Lichtwelle" 4 bezeichneter Teil des gestreuten Lichts wird unter einem Winkel $\phi$ abgestreut und gelangt in einen in der entsprechenden Richtung angeordneten Detektor 6. Ein anderer Teil des Lichts des Lichtstrahls 2 passiert die Umgebung des Garns 3 unverändert und wird im Folgenden als "zweite Lichtwelle" 5 bezeichnet. Die zweite Lichtwelle gelangt auf einen Umlenkspiegel 7, von wo sie ebenfalls in den Detektor 6 geworfen wird.

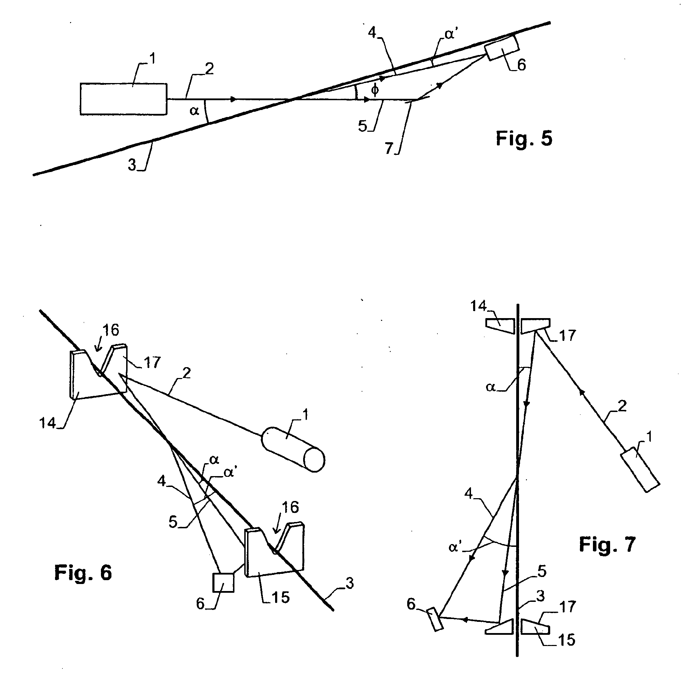

Aufgrund der durch die Bewegung des Garns 3 erzeugten Dopplerverschiebung ist die Frequenz der ersten Lichtwelle 4 nicht genau jene des Lichtstrahls 2, so dass es im Bereich der Überlagerung der beiden Lichtwellen 4, 5 beim Detektor 6 zu einer Schwebung kommt, welche als elektrisches Wechselstromsignal (bzw. Wechselspannungssignal) einer Frequenz f gemessen werden kann. Die Grösse der Frequenz f hängt direkt von der Geschwindigkeit v ab. Weiter hängt sie vom Winkel $\phi$ ab, genauer gesagt von der Grösse der Impulsänderung, welche die Photonen bei der Streuung in Richtung des Geschwindigkeitsvektors des Garns 3 erfahren. Die entsprechenden Formeln sind dem Fachmann bekannt und erlauben es, bei bekannter Geometrie der Anordnung und bekannter Wellenlänge des Lichts der Lichtquelle 1 aus der Frequenz f direkt die Geschwindigkeit v zu bestimmen. Eine entsprechende Formel wird im Sinne eines Beispiels später im Zusammenhang mit der Ausführung nach Fig. 5 beschrieben.

Die Intensität der ersten Lichtwelle 4 wird in der Regel schwächer sein als jene der zweiten Lichtwelle 5, da nur ein verhältnismässig kleiner Anteil des Lichtes des Lichtstrahls 2 überhaupt gestreut wird, und davon nur ein Teil tatsächlich auf den nur einen kleinen Raumwinkel beobachtenden Detektor 6 fällt. Dies führt dazu, dass ohne zusätzliche Massnahmen das Signal des Detektors 6 einen schlechten Kontrast aufweist, d.h. es besitzt einen hohen Gleichstromanteil, während der eigentlich interessierende Wechselstromanteil wesentlich geringer ist. Solange der Detektor 6 dabei nicht in Sättigung kommt, ist dies ein untergeordnetes Problem. Vorteilhafterweise wird zur Kontrastverbesserung jedoch die zweite Lichtwelle 5 vor der Überlagerung mit der ersten Lichtwelle 4 abgeschwächt; genauer gesagt - da in der Regel beide Lichtwellen zwischen dem Garn 3 und dem Detektor 6 durch Streuverluste und Absorption, z.B. an zwischengeschalteten optischen Komponenten, abgeschwächt werden - sollte die zweite Lichtwelle vor der Überlagerung stärker abgeschwächt werden als die erste. Die zusätzliche Abschwächung der zweiten Lichtwelle sollte vorzugsweise mindestens 90% betragen.

Die Abschwächung der zweiten Lichtwelle 5 kann z.B. dadurch erfolgen, dass Spiegel 7 ein teildurchlässiger Spiegel ist, der mindestens 90% der Lichtleistung transmittiert und lediglich 10% oder weniger reflektiert.

In der Lösung gemäss Fig. 1 verlaufen die beiden Lichtwellen 4 und 7 bei ihrer Überlagerung nicht parallel, was dazu führt, das auf dem Detektor 6 ein Interferenzlinienmuster erzeugt wird. Um ein deutliches Signal bei der Frequenz f zu erhalten, muss der Detektor deshalb so ausgestaltet werden, dass er in einer Richtung senkrecht zu den Interferenzlinien eine Ausdehnung von höchstens ca. einer Linienbreite besitzt, oder es muss in der Richtung senkrecht zu den Interferenzlinien ein Array von Sensoren vorgesehen sein, deren Signale einzeln ausgewertet werden können.

Fig. 2 zeigt eine Lösung (nicht beansprucht), bei welcher die erste und die zweite Lichtwelle 4 bzw. 5 vor ihrer Überlagerung parallel zueinander gemacht werden, was es erlaubt, einen Detektor mit grösserer sensitiver Fläche einzusetzen. Hierzu wird die zweite Lichtwelle 5 vom Spiegel 7 auf einen Strahlkombinierer 9 geworfen, durch welchen auch die erste Lichtwelle 4 tritt. Im Strahlkombinierer 9 werden die beiden Lichtwellen 4 und 5 überlagert und parallel auf den Detektor 6 geworfen.

Der Strahlkombinierer 9 kann z.B. als teildurchlässiger Spiegel ausgestaltet sein, welcher eine grössere Transmission als Reflektion aufweist, z.B. eine Transmission von 90% und eine Reflektion von 10%. In diesem Falle schwächt er die erste Lichtwelle 4, welche ihn in Transmission durchsetzt, praktisch nicht ab, während er die zweite Lichtwelle 5 stark abschwächt, so dass auf diese Weise die oben beschriebene Kontrastverbesserung erzielt werden kann.

Der Strahlkombinierer 9 kann auch von einer ersten Oberfläche eines Prismas gebildet werden, wobei eine zweite Oberfläche des Primas den Spiegel 7 bildet. Denkbar ist es weiter, dass der Strahlkombinierer 9 von einem Beugungsgitter, insbesondere einem Bragg-Gitter gebildet wird.

Eine weitere Ausführung (nicht beansprucht) wird in Fig. 3 gezeigt. Hier werden die erste und die zweite Lichtwelle durch eine Abbildungsoptik 10 geführt, welche z.B. die Form einer Linse besitzen kann, und die den vom Lichtstrahl 2 beleuchteten Bereich des Garns auf die Ebene des Detektors 6 abbildet. Der Vorteil dieser Anordnung liegt darin, dass auf dem Detektor 6 diejenigen Photonen aus beiden Lichtwellen zusammentreffen, welche aus jeweils dem gleichen Punkt der Ebene des Garns 3 stammen. Dadurch werden die Anforderungen an die räumliche Kohärenz des Laserstrahls reduziert.

Wie aus der Figur ersichtlich, ist zwischen dem Garn 3 und dem Detektor 6 weiter eine Blende 11 mit zwei Öffnungen 12, 13 vorgesehen, mit welcher sichergestellt werden kann, dass nur Lichtwellen erfasst werden, welche sich ausgehend vom beleuchteten Bereich des Garns 3 in zwei Richtungen erstrecken: Einerseits wird durch Öffnung 12 die unter Winkel φ abgestreute erste Lichtwelle erfasst, andererseits durch Öffnung 13 die ungestreute zweite Lichtwelle. Ohne die Blende 13 würde der Detektor 6 bei der Ausführung nach Fig. 6 (nicht beansprucht) eine Mischung aus einer Vielzahl von Signalen unterschiedlicher Frequenzen auffangen.

Grundsätzlich ist es nicht notwendig, dass es sich bei der zweiten Lichtwelle um ungestreutes Licht handelt. Auch sie kann von gestreutem Licht gebildet werden, solange dieses eine andere Dopplerverschiebung erfahren hat als die erste Lichtwelle.

Eine entsprechende Ausführung ist in Fig. 4 (nicht beansprucht) dargestellt. Diese ist gleich ausgebildet wie jene nach Fig. 3, mit dem Unterschied, dass die zweite Öffnung 13 der Maske 11 so angeordnet wird, dass die zweite Lichtwelle von Licht gebildet wird, dass unter dem Winkel -φ abgestreut wurde.

Auch die Ausführungen nach Fig. 1 und 2 könnten so abgewandelt werden, dass beide Lichtwellen 4, 5 von gestreutem Licht gebildet werden, indem der Spiegel 7 entsprechend umpositioniert wird.

In den bisher gezeigten Ausführungen kreuzen sich der Lichtstrahl 2 und das Garn 3 unter einem rechten Winkel. Dies ist jedoch nicht notwendig. So zeigt Fig. 5 (nicht beansprucht) eine Anordnung, bei welcher sich der Lichtstrahl 2 und das Garn 3 unter einem Winkel $\alpha < 90°$ treffen.

Für eine derartige Ausführung kann die Frequenz $f_E$ des Lichts beim Detektor 6 wie folgt errechnet werden:

$$f_E = \left[ 1 + \frac{v}{c} \cdot \sin\left(\frac{\phi}{2} - \alpha\right) \cdot \sin\left(\frac{\phi}{2}\right) \right]^2 \cdot f_S,$$

wobei v die Geschwindigkeit des Garns, c die Lichtgeschwindigkeit und $f_S$ die Frequenz des Lichts der Lichtquelle 1 sind. $\alpha$ ist der Winkel zwischen Lichtstrahl 2 und Garn 3 und φ der Streuwinkel. Das vom Detektor 6 gemessene Wechselstromsignal hat, falls keine weitere Phasenmodulation durchgeführt wird, die Frequenz $|f_S - f_E|$.

In einer vorteilhaften Ausführung wird der Winkel $\alpha$ zwischen dem Lichtstrahl 2 und der Längsrichtung des Garns 3 klein gewählt, z.B. höchstens 30°, insbesondere höchstens 10°. Dies hat den Vorteil, dass ein relativ langer Interaktionsweg zwischen Garn 3 und Lichtstrahl 2 vorhanden ist, so dass mehr Licht gestreut werden kann. Vorteilhaft sollte in diesem Fall auch der Winkel $\alpha'$ zwischen der ersten Lichtwelle 4 und dem Garn 3 relativ klein, z.B. höchsten 30°, insbesondere höchstens 10°, gewählt werden, damit die Dopplerverschiebung der Frequenz aller vom Detektor 6 empfangenen ersten Lichtwellen möglichst wenig streut. Bei grossem Winkel $\alpha'$ würde der Detektor 6 aufgrund des langen Interaktionswegs zwischen Strahl 2 und Garn 3 eine Vielzahl von ersten Lichtwellen aus leicht unterschiedlichen Richtungen empfangen, was zu einer breiten Verteilung von Frequenzverschiebungen führt.

Eine Implementierung des Konzepts von Fig. 5 ist in Fig. 6 und 7 (nicht beansprucht) dargestellt. Diese Figuren zeigen zwei Führungselemente 14, 15, welche je eine Ausnehmung 16 zur seitlichen Führung des Garns 3 besitzen. Wie ersichtlich, wird der Lichtstrahl 2 auf die reflektierend ausgestaltete Innenseite 17 des ersten Führungselements 14 geworfen und von dort so reflektiert, dass er sich mit dem Garn 3 unter flachem Winkel $\alpha$ kreuzt. Die (gestreute) erste Lichtwelle 4 wird im vorliegenden Beispiel sodann direkt auf den Detektor 6 geworfen, während die (im vorliegenden Beispiel nicht gestreute) zweite Lichtwelle 5 auf die reflektierend ausgestaltete Innenseite 17 des zweiten Führungselements 15 trifft und von dort ebenfalls zum Detektor 6 geworfen wird.

Denkbar ist es auch, dass sowohl die erste, als auch die zweite oder nur die erste Lichtwelle auf das zweite Führungselement 15 treffen bzw. trifft.

In der Ausführung nach Fig. 6 sind die Innenseiten 17 des ersten und des zweiten Führungselements 14 bzw. 15 reflektierend ausgestaltet und so geformt, dass sie den ankommenden Lichtstrahl bzw. die ankommende Lichtwelle in die richtige Richtung werfen. Denkbar ist es jedoch auch, dass die Lichtquelle 1 und/oder der Detektor 6 in oder hinter dem jeweiligen Führungselement 14 bzw. 15 angeordnet wird und dass die Führungselemente mindestens teilweise transparent ausgestaltet werden - in diesem Fall kann der Lichtstrahl auch aus dem ersten Führungselement 14 direkt austreten und eine oder beide Lichtwellen kann bzw. können in das zweite Führungselement 15 eintreten um so zum Detektor 6 zu gelangen.

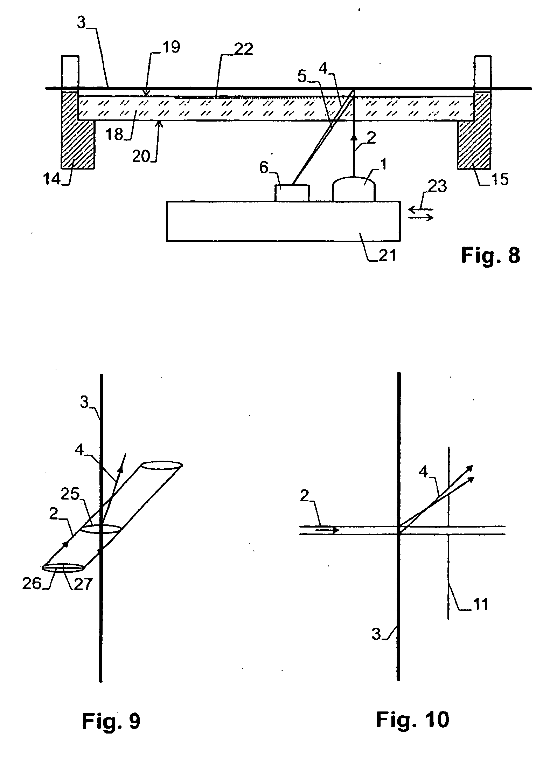

Eine weitere Ausführung ist in Fig. 8 dargestellt. Hier wird das in den Führungselementen 14, 15 geführte Garn 3 an der Oberfläche 19 eines transparenten Körpers 18 entlang geführt. Auf der anderen Seite des transparenten Körpers 18 sind die Lichtquelle 1 und der Detektor 6 auf einem gemeinsamen Träger 21 angeordnet. Der von der Lichtquelle 1 austretende Lichtstrahl 2 tritt über eine Oberfläche 20 in den transparenten Körper 18 ein, wobei Oberfläche 20 gegenüber der Oberfläche 19 liegt. Mindestens ein Teil des Lichts des Lichtstrahls 2 durchtritt sodann die Oberfläche 19 und trifft auf das Garn 3, wo es gestreut wird und so die erste Lichtwelle 4 erzeugt. Diese wird zurück durch den transparenten Körper 18 geworfen und trifft auf den Detektor 6, wo sie mit der zweiten Lichtwelle 5 überlagert wird.

Die zweite Lichtwelle 5 kann durch Streuung an einer der Oberflächen 19, 20 des transparenten Körpers erzeugt werden. Im Beispiel nach Fig. 8 geschieht dies dadurch, dass die dem Garn 3 zugewandte Oberfläche 19 in einem Bereich 22 aufgerauht ist, so dass sie einen Teil des Lichts des Lichtstrahls 2 im Wesentlichen diffus streut. Ein Teil dieses diffus gestreuten Lichtes gelangt in den Detektor 6 und bildet somit die zweite Lichtwelle 5.

Vorzugsweise ist der Bereich 22 nicht gleichmässig aufgerauht, sondern die Rauhigkeit variiert graduell oder in mehreren Stufen entlang der Längsrichtung des Garns 3, so dass die Intensität der zweiten Lichtwelle 5 von der relativen Position des Trägers 21 und des Körpers 18 abhängt. Indem der Träger 21 relativ zum Körper 18 parallel zur Längsrichtung des Garns verschoben wird, wie durch die Pfeile 23 angedeutet, kann somit die Helligkeit der zweiten Lichtwelle 5 angepasst werden, um einen optimalen Kontrast des Signals am Detektor 6 zu erzielen.

In den soweit gezeigten Ausführungsbeispielen ist Lichtstrahl 2 als Linie dargestellt. Vorzugsweise sollte sein Durchmesser jedoch nicht zu klein gewählt werden, damit das Garn 3 bei seitlichen Bewegungen nicht aus dem Messbereich austritt. Andererseits sollte die Ausdehnung des Messstrahls in Längsrichtung des Garns jedoch möglichst klein sein, damit es einfacher wird, zur Verwertung im Detektor 6 diejenigen Lichtwellen auszuwählen, die möglichst genau unter dem Winkel $\phi$ gestreut wurden.

Dies ist in Fig. 9 und 10 illustriert. Demnach besitzt die Lichtwelle 2 beim Auftreffen auf das Garn 3 einen länglichen Querschnitt 25, dessen lange Querschnittsachse 26 im Wesentlichen senkrecht zum Garn 3 steht. Die lange Querschnittsachse 26 besitzt vorzugsweise eine Länge von mindestens 3 Millimetern, damit das Garn bei typischen Querbewegungen nicht aus dem Messbereich tritt. Die Länge der kurzen Querschnittachse 27 beträgt vorteilhaft höchstens 1 mm.

Ein Lichtstrahl 2 mit länglichem Querschnitt kann z.B. mittels zylindrischer Ablenkoptik oder mittels Brechung an einem Prisma erzeugt werden. Entsprechende Verfahren sind dem Fachmann bekannt. Denkbar ist es auch, dass die Lichtquelle selbst bereits einen Strahl mit länglichem Querschnitt liefert, was z.B. für sogenannte "edge emitting" Halbleiterlaser der Fall ist.

Die Massnahme gemäss Fig. 9 und 10 eignet sich zum Einsatz in allen hier gezeigten Ausführungen des Geräts. Zudem kann sie auch bei Geräten verwendet werden, bei denen der Lichtstrahl vor dem Garn durch einen Strahlteiler geführt wird um so zwei Teilstrahlen zu erzeugen, welche z.B. am Garn wieder gekreuzt werden.

Generell eignen sich insbesondere Halbleiterlaser als Lichtquellen, da sie kompakt und preiswert sind. Grundsätzlich eignen sich sowohl sogenannte "Monomode-", wie auch "Multimode"-Laser. Multimode-Laser bieten den Vorteil, dass sie eine höhere Leistung liefern können. Solange der Frequenzabstand der Moden der "Multimode"-Laser grösser ist als die maximal erreichbare Dopplerverschiebung in den am Garn gestreuten Lichtwellen, kann die Messung ohne weitere Modifikation von den beschriebenen Ausführungen des Messgeräts durchgeführt werden.

Wie bereits erwähnt, sollte bei denjenigen Ausführungen, bei welchen die zweite Lichtwelle von Licht gebildet wird, das nicht am Garn 3 gestreut wurde, die zweite Lichtwelle zusätzlich abgeschwächt werden, um einen guten Signalkontrast zu erhalten. Während dies, wie beschrieben, mittels teildurchlässigen Spiegeln, aber auch mittels geeigneter Filter geschehen kann, kann hierzu auch ein vorzugsweise lineares Polarisationsfilter 29 eingesetzt werden, wie es als Beispiel in Fig. 3 eingezeichnet ist. Dieses ist so angeordnet, dass beide Lichtwellen 4, 5 durch es hindurchtreten, und es ist so orientiert, dass es das Licht der zweiten Lichtwelle fast (aber nicht ganz) abblockt und somit abschwächt. Der Einfluss des Polarisationsfilters auf die erste Lichtwelle ist hingegen geringer, da deren Licht aufgrund der Streuung teilweise oder vollständig depolarisiert oder zumindest in seiner Polarisation gedreht ist. Somit wird das Licht der zweiten Lichtwelle 5 im Polarisationsfilter 29 wesentlich stärker abgeschwächt als jenes der ersten Lichtwelle 4 und der Kontrast verbessert sich. Durch Drehen des Polarisationsfilters 29 kann der Kontrast optimiert werden.

Ein Polarisationsfilter dieser Art kann bei allen Ausführungen des Geräts eingesetzt werden, solange das Licht von der Lichtquelle 1 polarisiert ist oder mit einem zweiten Polarisationsfilter polarisiert wird.

In den Ausführungsbeispielen von Fig. 3 und Fig. 4 ist der Einsatz einer Blende und Abbildungsoptik gezeigt worden. Der Einsatz von Blenden und optischen E-menten kann auch in den anderen Ausführungsbeispielen sinnvoll sein und ist nicht auf die Ausführungsbeispiele von Fig. 3 und Fig. 4 begrenzt.

Um die Anlage unempfindlicher gegen Umgebungslicht zu machen, kann in allen Ausführungen am Detektor 6 ein Farbfilter 31 angeordnet werden, wie es als Beispiel in Fig. 1 angedeutet ist. Dabei handelt es sich um ein Bandpassfilter, das im wesentlichen nur für die Wellenlänge des Lichts der Lichtquelle 1 durchlässig ist.

Die gezeigten Vorrichtungen sind ohne weitere Massnahmen nicht in der Lage, das Vorzeichen der Garnbewegung zu bestimmen. Da das Garn z.B. bei der Garnreinigung jedoch durchaus streckenweise auch zurückgespult werden kann, ist eine Erfassung dieses Vorzeichens z.B. für die Längenintegration wichtig. Wenn das Vorzeichen der Geschwindigkeit bei der Integration berücksichtigt wird, können die Garnlänge sowie die Länge und Position von Garnfehlern korrekt bestimmt werden, selbst wenn das Garn rückwärts gefahren wird.

Das Vorzeichen der Geschwindigkeit erhält man, indem man eine der beiden Lichtwellen in der Frequenz verschiebt (z.B. mit einem akusto-optischen Modulator). Dadurch erhält man selbst bei unbewegtem Garn vom Detektor ein Interferenzsignal mit einer Frequenz grösser Null. Die Frequenzverschiebung durch die Garnbewegung kann nun sowohl zu höheren als auch zu niedrigeren Frequenzen erfolgen, womit das Vorzeichen der Geschwindigkeit ersichtlich wird. In ähnlicher Weise lässt sich dieses Resultat auch mit einem Phasenmodulator (z.B. einer Pockelszelle, einem oszillierender Spiegel, etc.) realisieren. Das Vorzeichen kann z.B. der Auswerteschaltung des Detektors 6 von einer äusseren Quelle, so z.B. von der Steuerung des Garnantriebs, zur Verfügung gestellt werden. In Fig. 1 ist dies durch Einfügen einer PockelsZelle 30 in den Strahlengang der zweiten Lichtwelle 5 illustriert.

Alternativ hierzu kann z.B. auch eine mechanische Modulation der Weglänge durchgeführt werden, beispielsweise indem der Spiegel 7 der Ausführung nach Fig. 1 mit einem Piezoelement hin- und herbewegt wird.

Diese Technik der Vorzeichenbestimmung kann für alle LDA-basierten Verfahren an Garnen eingesetzt werden.

**Patentansprüche**

1.  Verfahren zum Bestimmen eines geschwindigkeitsabhängigen Parameters eines Garns (3), bei welchem ein Lichtstrahl (2) auf das Garn (3) geworfen und durch Streuung in mindestens eine erste Lichtwelle (4) gestreut wird, wobei die erste Lichtwelle (4) bei einem Detektor (6) mit einer zweiten Lichtwelle (5) zur Überlagerung gebracht wird und die Dopplerverschiebung zwischen den Frequenzen der ersten und der zweiten Lichtwelle (4, 5) ermittelt wird, wobei das Garn (3) an einem transparenten Körper (18) vorbei geführt wird und wobei die erste Lichtwelle (4) erzeugt wird, indem Licht vom Lichtstrahl (2) aus dem Körper (18) austritt und vom Garn (3) gestreut wird, **dadurch gekennzeichnet, dass** die zweite Lichtwelle (5) durch Streuung, insbesondere Reflektion, eines Teils des Lichtstrahls an einer Oberfläche (19) des transparenten Körpers (18) erzeugt wird.

2.  Verfahren nach Anspruch 1, wobei die erste Lichtwelle (4) und die zweite Lichtwelle (5) vor dem Detektor (6) parallel gemacht werden.

3.  Verfahren nach Anspruch 2, wobei die erste und die zweite Lichtwelle (4, 5) vor dem Detektor (6) in einem optischen Strahlkombinierer (9) zusammengeführt werden, wobei der optische Strahlkombinierer (9) die erste Lichtwelle (4) weniger abschwächt als die zweite Lichtwelle (5), und insbesondere wobei der Strahlkombinierer (9) ein teildurchlässiger Spiegel ist, wobei eine der Lichtwellen durch den teildurchlässigen Spiegel hindurch zum Detektor (6) gelangt und die andere der Lichtwellen am teildurchlässigen Spiegel reflektiert zum Detektor (6) gelangt.

4.  Verfahren nach einem der vorangehenden Ansprüche, wobei die erste und die zweite Lichtwelle (4, 5) durch eine Abbildungsoptik (10) geführt werden, welche einen vom Lichtstrahl (2) beleuchteten Bereich des Garns (3) auf den Detektor (6) abbildet.

5.  Verfahren nach einem der vorangehenden Ansprüche, wobei ein Winkel ($\alpha$) zwischen einer Längsrichtung des Garns (3) und dem Lichtstrahl höchstens 30°, insbesondere höchstens 10°, beträgt, und insbesondere wobei auch ein Winkel ($\alpha$') zwischen der Längsrichtung des Garns (3) und der ersten Lichtwelle (4) höchstens 30°, insbesondere höchstens 10°, beträgt.

6.  Verfahren nach einem der vorangehenden Ansprüche, wobei der Lichtstrahl (2) beim Auftreffen auf das Garn (3) einen länglichen Querschnitt mit einer kurzen und einer langen Querschnittsachse (27, 26) aufweist, wobei die lange Querschnittsachse (26) im wesentlichen senkrecht zum Garn (3) steht.

7.  Verfahren nach Anspruch 6, wobei die lange Querschnittsachse (26) eine Länge von mindestens 3 Millimetern und/ oder die kurze Querschnittsachse (27) eine Länge von höchstens 1 Millimeter aufweist.

8.  Verfahren nach einem der vorangehenden Ansprüche, wobei die erste Lichtwelle (4) zurück in den transparenten Körper (18) fällt und danach mit der zweiten Lichtwelle (5) überlagert wird.

9.  Verfahren nach einem der vorangehenden Ansprüche, wobei eine dem Garn (3) zugewandte Oberfläche des transparenten Körpers aufgeraut ist und die zweite Lichtwelle (5) an der Oberfläche durch Streuung erzeugt wird, und insbesondere wobei eine Rauhigkeit der dem Garn (3) zugewandten Oberfläche (19) des transparenten Körpers (18) entlang der Längsrichtung des Garns (3) graduell oder in mehreren Stufen variiert und die relative Position zwischen dem transparenten Körper (18) und der Lichtquelle sowie dem Detektor (6) zur Kontrastoptimierung eines Signals vom Detektor (6) variiert wird.

10. Verfahren nach einem der vorangehenden Ansprüche, wobei der Lichtstrahl (2) mit einem Mehrmoden-Halbleiterlaser erzeugt wird.

11. Verfahren nach einem der vorangehenden Ansprüche, wobei die erste und die zweite Lichtwelle (4, 5) vor dem Detektor (6) durch ein Polarisationsfilter (29) geführt werden, welches die zweite Lichtwelle (5) stärker abschwächt als die erste Lichtwelle (4).

12. Verfahren nach einem der vorangehenden Ansprüche, wobei eine der beiden Lichtwellen (4, 5) durch einen Phasenmodulator (30) geführt wird um ein Vorzeichen der Geschwindigkeit zu ermitteln.

13. Verwendung des Verfahrens nach einem der vorangehenden Ansprüche zum Messen einer Garngeschwindigkeit, einer Garnlänge und/oder der Länge oder Position von Garnfehlern.

14. Verwendung nach Anspruch 13, wobei die Garnlänge bzw. die Länge oder Position der Garnfehler durch Integration der Geschwindigkeit des Garns unter Berücksichtigung eines Vorzeichens der Geschwindigkeit ermittelt wird.

**Claims**

1. Method for determining a speed-dependent parameter of a yarn (3), wherein a light beam (2) is sent to the yarn (3) and is refracted by refraction in at least a first light wave (4), wherein the first light wave (4) is overlapped with a second light wave (5) at a detector (6) and the Doppler shift between the frequencies of the first and the second light wave (4, 5) is determined, wherein the yarn (3) is guided past a transparent body (18) and wherein the first light wave (4) is generated by light of the light beam (2) leaving the body (18) and being refracted by the yarn (3), **characterized in that** the second light wave (5) is generated by refraction, particularly reflexion, of a part of the light beam at a surface (19) of the transparent body (18).

2. Method according to claim 1, wherein the first light wave (4) and the second light wave (5) are made parallel before the detector (6).

3. Method according to claim 2, wherein the first and the second light wave (4, 5) are united in an optical beam combiner (9) before the detector (6), wherein the optical combiner (9) attenuates the first light wave (4) less than the second light wave (5), and particularly wherein the beam combiner (9) is a semi-transparent mirror, wherein one of the light waves gets to the detector (6) through the semi-transparent mirror and the other light wave gets to the detector by reflection at the semi-transparent mirror.

4. Method according to one of the preceding claims, wherein the first and the second light wave (4, 5) are guided through projection optics (10) which projects a zone of the yarn (3) which is illuminated by the light beam (2) onto the detector (6).

5. Method according to one of the preceding claims, wherein an angle ($\alpha$) between a longitudinal direction of the yarn (3) and the light beam amounts to maximum 30°, particularly maximum 10°, and particularly wherein also an angle ($\alpha'$) between the longitudinal direction of the yarn (3) and the first light wave (4) amounts to maximum 30°, particularly maximum 10°.

6. Method according to one of the preceding claims, wherein the light beam (2) has an elongated cross-section with a short and a long cross-section axis (27, 26) when it hits the yarn (3), wherein the long cross-section axis (26) is substantially perpendicular to the yarn (3).

7. Method according to claim 6, wherein the long cross-section axis (26) has a length of at least 3 millimeters and/or the short cross-section axis (27) has a length of at most 1 millimeter.

8. Method according to one of the preceding claims, wherein the first light wave (4) falls back into transparent body (18) and is overlapped with the second light wave (5) thereafter.

9. Method according to one of the preceding claims, wherein a surface of the transparent body facing the yarn (3) is roughened and the second light wave (5) is generated at the surface by refraction, and particularly wherein a roughness of the surface (19) of the transparent body (18) facing the yarn (3) is varied gradually or in a plurality of steps and the relative position between the transparent body (18) and the light source as well as the detector (6) is varied in order to optimize the contrast.

10. Method according to one of the preceding claims, wherein the light beam (2) is generated with a multiple-mode semiconductor laser.

11. Method according to one of the preceding claims, wherein the first and the second light wave (4, 5) are guided through a polarisation filter (29) before the detector (6), which attenuates the second light wave (5) more than the first light wave (4).

12. Method according to one of the preceding claims, wherein one the two light waves (4, 5) is guided through a phase modulator (30) in order to determine a sign of the speed.

13. Use of the method according to one of the preceding claims for measuring a yarn speed, a yarn length and/or the length or position of yarn defects.

14. Use according to claim 13, wherein the yarn length or the length or position of the yarn defects respectively is determined by integrating the speed of the yarn by taking into account a sign of the speed.

**Revendications**

1. Méthode pour déterminer un paramètre, qui est dépendant de la vitesse, d'un fil (3), un faisceau de lumière (2) étant envoyé sur le fil (3) et étant réfracté par réfraction dans au moins une première onde de lumière (4), la première onde de lumière (4) étant superposé à une deuxième onde de lumière (5) auprès d'un détecteur (6) et le décalage Doppler entre les fréquences de la première et la deuxième onde de lumière (4, 5) étant déterminé, le fil (3) étant guidé à côté d'un corps transparent (18) et la première onde de lumière (4) étant générée en ce que de la lumière du faisceau de lumière (2) sort du corps (18) et est réfractée par le fil (3), **caractérisée en ce que** la deuxième onde de lumière (5) est généré auprès d'une surface (19) du corps transparent (18) par une réfraction, particulièrement une réflexion, d'une partie du faisceau de lumière.

2. Méthode selon la revendication 1, la première onde de lumière (4) et la deuxième onde de lumière (5) étant parallélisées avant le détecteur (6).

3. Méthode selon la revendication 2, la première et la deuxième onde de lumière (4, 5) étant réunies avant le détecteur (6) dans un combinateur de faisceaux optique (9), le combinateur de faisceaux optique (9) atténuant la première onde de lumière (4) moins que la deuxième onde de lumière (5), et particulièrement le combinateur de faisceaux (9) étant un miroir semi-transparent, une des ondes de lumière arrivant au détecteur (6) à travers du miroir semi-transparent et l'autre onde de lumière arrivant au détecteur (6) après une réflexion au miroir semi-transparent.

4. Méthode selon l'une des revendications précédentes, la première et la deuxième onde de lumière (4, 5) étant guidés à travers d'une optique de projection (10) qui projette une partie du fil (3) qui est illuminée par le faisceau de lumière (2) sur le détecteur (6).

5. Méthode selon l'une des revendications précédentes, un angle ($\alpha$) entre une direction longitudinale du fil (3) et le faisceau de lumière comportant au maximum 30°, particulièrement au maximum 10°, et particulièrement aussi un angle ($\alpha'$) entre la direction longitudinale du fil (3) et la première onde de lumière (4) comportant au maximum 30°, particulièrement au maximum 10°.

6. Méthode selon l'une des revendications précédentes, le faisceau de lumière (2) ayant une section transversale oblongue avec un court et un long axe de section transversale (27, 26) quand il rencontre le fil (3), l'axe de section transversale (26) étant essentiellement perpendiculaire au fil (3).

7. Méthode selon la revendication 6, l'axe de section transversale long (26) ayant une longueur d'au moins 3 millimètres et/ou l'axe de section transversale court (27) ayant une longueur d'au maximum 1 millimètre.

8. Méthode selon l'une des revendications précédentes, la première onde de lumière (4) retournant dans le corps transparent (18) et après étant superposée à la deuxième onde de lumière (5).

9. Méthode selon l'une des revendications précédentes, une surface face au fil (3) du corps transparent étant grattée et la deuxième onde de lumière (5) étant générée auprès de la surface par une réfraction, et particulièrement une rugosité de la surface (19) face au fil (3) du corps transparent (18) variant graduellement ou par étapes le long de la direction longitudinale du fil (3) et la position relative entre le corps transparent (18) et la source de lumière et également le détecteur (6) étant variée afin d'optimiser le contraste d'un signal du détecteur (6).

10. Méthode selon l'une des revendications précédentes, le faisceau de lumière (2) étant généré avec un laser multimode à semiconducteur.

11. Méthode selon l'une des revendications précédentes, la première et la deuxième onde de lumière (4, 5) étant guidées à travers d'un filtre de polarisation (29) avant le détecteur (6), qui atténue la deuxième onde de lumière (5) plus que la première onde de lumière (4).

12. Méthode selon l'une des revendications précédentes, une des deux ondes de lumière (4, 5) étant guidée à travers d'un modulateur de phase (30) afin de déterminer un signe de la vitesse.

13. Usage de la méthode selon l'une des revendications précédentes pour mesurer une vitesse du fil, une longueur du fil et/ou la longueur ou position de défauts du fil.

14. Usage selon la revendication 13, la longueur du fil ou bien la longueur ou position des défauts du fil étant déterminée par intégration de la vitesse du fil en tenant compte d'un signe de la vitesse.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5064280 A

### In der Beschreibung aufgeführte Nicht-Patentliteratur

- The contactless determination of yarn speed with a laser-Doppler velocity meter. **G. C. Dubbeldam.** Journal of the Textile Institute. Woodhead Publ. Ltd, 1974, vol. 65, 483-487